# EUROPEAN PATENT APPLICATION

(11) **EP 3 385 782 A1**
(43) Date of publication of application: **10.10.2018**
(21) Application number: 17165444.5
(22) Date of filing: 07.04.2017
(51) Int. Cl.: G02F 1/1335

(54) **LCD DISPLAY DEVICE**

(71) Applicant: PowerView Display Corporation, Zhubei City, Hsinchu County 30265 (TW)
(72) Inventor: HSIEH, Ching-Tung, 30067 Hsinchu City (TW)
(74) Representative: Krauns, Christian

(57) **Abstract**

A LCD display device includes a backlight module (370, 570) with a first light bar (377), a rear bezel (380) and a diffuser (378). After a first light beam emitted by the first light bar (377) passes through the diffuser (378), the first light beam exits the backlight module (370, 570). The rear bezel (380) is a heatsink-type rear bezel (380). Plural fins (382) are formed on a first surface of the heatsink-type rear bezel (380). The first light bar (377) is fixed on a second surface of the heatsink-type rear bezel (380).

## Description

### FIELD OF THE INVENTION

The present invention relates to a LCD display device, and more particularly to a LCD display device with enhanced heat dissipating efficacy.

### BACKGROUND OF THE INVENTION

Nowadays, LCD monitors have been widely used in our daily lives. For example, LCD monitors are used in computer screens, televisions, mobile phone screens, outdoor electronic billboards, and so on.

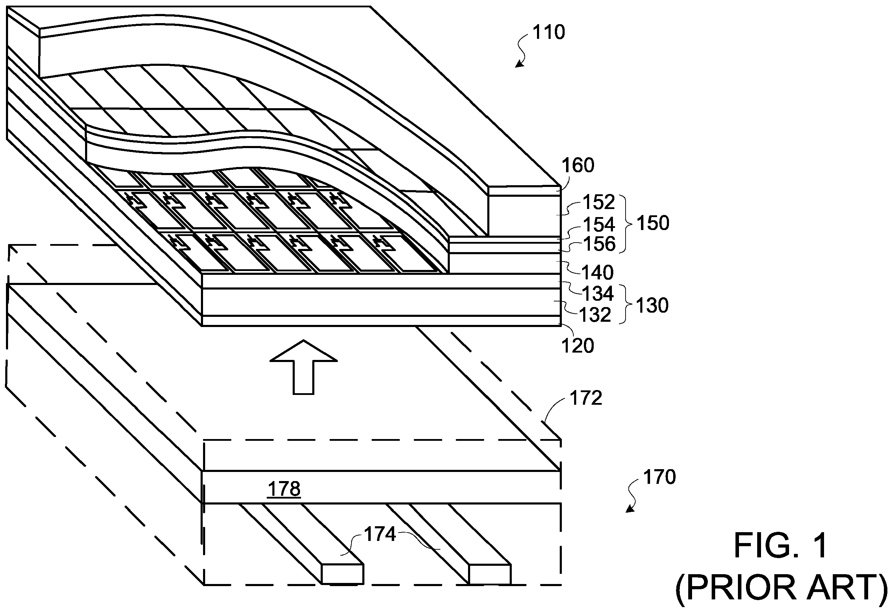

FIG. 1 schematically illustrates the structure of a conventional LCD monitor. As shown in FIG. 1, the conventional LCD monitor comprises a cell module 110 and a backlight module 170.

The cell module 110 comprises a down polarizer 120, a thin film transistor (TFT) substrate 130, a liquid crystal material layer 140, a color filtering substrate 150 and an upper polarizer 160. The TFT substrate 130 comprises a glass plate 132 and a TFT layer 134. The TFT layer 134 is formed on the glass plate 132. Moreover, the TFT layer 134 comprises thin film transistors and transparent electrodes that are arranged in an array. Moreover, the color filtering substrate 150 comprises a glass plate 152, a color filter 154 and a transparent electrode layer 156. The color filter 154 and the transparent electrode layer 156 are formed on the glass plate 152. Generally, the transparent electrode layer 156 is made of indium tin oxide (ITO).

The backlight module 170 comprises a rear bezel 172, a light source 174 and a diffuser 178.

The backlight module 170 as shown in FIG. 1 is a bottom-lighting backlight module. The light source 174 and the diffuser 178 are covered by the rear bezel 172. Consequently, the light beam is not leaked out from the lateral sides or the rear side of the backlight module 170. After the light beam emitted by the light source 174 passes through the diffuser 178, the light beam exits from a front side of the diffuser 178 and enters the cell module 110.

Another backlight module is an edge-lighting backlight module. The edge-lighting backlight module further comprises a light guide plate. The light beam emitted by the light source is laterally introduced into the light guide plate. The direction of the light beam is changed by the light guide plate. After the light beam passes through the diffuser 178, the light beam exits from the front side of the diffuser 178 and enters the cell module 110.

Generally, the LCD monitor with the cell module 110 and the edge-lighting backlight module has light weightiness and small thickness. Consequently, this LCD monitor is usually applied to a mobile phone, a notebook computer, a television or a computer screen.

Moreover, the LCD monitor with the cell module 110 and the bottom-lighting backlight module is heavier and larger. Consequently, this LCD monitor is usually applied to a large-sized electronic billboard.

The bottom-lighting backlight module 170 has many advantages. Since the light beam from the light source 174 passes through the diffuser 178 in the upward direction, the light beam is uniformly scattered by the diffuser 178. Moreover, the light beam exits from the front side of the diffuser 178 and enters the cell module 110. Consequently, the bottom-lighting backlight module 170 has simpler structure, higher light utilization, higher luminance and wider viewing angle.

Since the large-sized electronic billboard (LCD monitor) has a large-sized cell module 110 and a large-sized bottom-lighting backlight module 170, the bottom-lighting backlight module 170 has to equip with more than one light sources 174. The thickness, weightiness and power consumption of the bottom-lighting backlight module 170 are increased.

### SUMMARY OF THE INVENTION

An embodiment of the present invention provides a LCD display device. The LCD display device includes a backlight module with a first light bar, a rear bezel and a diffuser. After a first light beam emitted by the first light bar passes through the diffuser, the first light beam exits the backlight module. The rear bezel is a heatsink-type rear bezel. Plural fins are formed on a first surface of the heatsink-type rear bezel. The first light bar is fixed on a second surface of the heatsink-type rear bezel.

Numerous objects, features and advantages of the present invention will be readily apparent upon a reading of the following detailed description of embodiments of the present invention when taken in conjunction with the accompanying drawings. However, the drawings employed herein are for the purpose of descriptions and should not be regarded as limiting.

### BRIEF DESCRIPTION OF THE DRAWINGS

The above objects and advantages of the present invention will become more readily apparent to those ordinarily skilled in the art after reviewing the following detailed description and accompanying drawings, in which:
FIG. 1 (prior art) schematically illustrates the structure of a conventional LCD monitor;
FIG. 2 is a schematic cross-sectional view illustrating a LCD monitor with a heat dissipating function;
FIG. 3A is a schematic perspective view illustrating a LCD display device with enhanced heat dissipating efficacy according to a first embodiment of the present invention;
FIG. 3B and 3C are schematic perspective views illustrating two variant examples of the first embodiment of the present invention;
FIG. 4A is a schematic cross-sectional view illustrating a LCD display device with enhanced heat dissipating efficacy according to a second embodiment of the present invention and taken along a first direction;
FIG. 4B is a schematic cross-sectional view illustrating the LCD display device according to the second embodiment of the present invention and taken along a second direction; and
FIG. 5 is a schematic cross-sectional view illustrating a LCD display device with enhanced heat dissipating efficacy according to a third embodiment of the present invention.

### DETAILED DESCRIPTION OF PREFERRED EMBODIMENTS

Nowadays, the outdoor electronic billboard needs a high luminance LCD monitor. Consequently, the backlight module needs plural high power light sources to emit a light beam with high luminance. Since the high power light source generates a great deal of heat, it is important to dissipate away the heat of the LCD monitor.

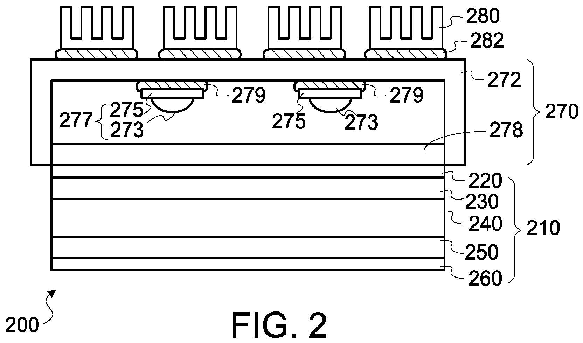

FIG. 2 is a schematic cross-sectional view illustrating a LCD monitor with a heat dissipating function. The LCD display device 200 can be applied to a large-sized electronic billboard. As shown in FIG. 2, the LCD display device 200 comprises a cell module 210, a backlight module 270 and plural heatsinks 280.

The cell module 210 comprises a down polarizer 220, a thin film transistor (TFT) substrate 230, a liquid crystal material layer 240, a color filtering substrate 250 and an upper polarizer 260. The structure of the cell module 210 of this embodiment is similar to that of the cell module 110 as shown in FIG. 1, and is not redundantly described herein.

The backlight module 270 comprises a metal rear bezel 272, plural light bars 277 and a diffuser 278. In an embodiment, the light bars 277 are high power LED light bars.

As shown in FIG. 2, the backlight module 270 comprises two light bars 277. Each light bar 277 comprises plural LED elements 273 and a circuit board 275. The plural LED elements 273 are fixed on the circuit board 275. Moreover, the light bars 277 are attached on an inner surface of the metal rear bezel 272 through thermal adhesives 279. After the light beams emitted by the light bars 277 pass through the diffuser 278, the light beams exit from the front side of the diffuser 278 and enter the cell module 210.

The metal rear bezel 272 is an enclosure with an opening. The light bars 277 and the diffuser 278 are covered by the metal rear bezel 272. Consequently, the light beams are not leaked out from the lateral sides or the rear side of the backlight module 270. In other words, after the light beams emitted by the light bars 277 pass through the diffuser 278, the light beams are only allowed to exit from the front side of the diffuser 278 and enter the cell module 210.

For increasing the heat dissipating efficacy, plural heatsinks 280 are attached on an outer surface of the metal rear bezel 272 through thermal adhesives 282. During operation of the LCD display device 200, the heat generated by the LED elements 273 of the light bars 277 is transferred to the heatsinks 280 through the circuit boards 275, the thermal adhesives 279, the metal rear bezel 272 and the thermal adhesives 282 and radiated to the ambient air.

However, the thermal resistances of the thermal adhesives 279 and 282 may influence the heat dissipating efficiency of the LCD display device 200. In the LCD display device 200 of FIG. 2, the heat generated by the LED elements 273 is transferred through the thermal adhesives 279 and 282. Consequently, the heat dissipating efficiency of the LCD display device 200 is adversely affected.

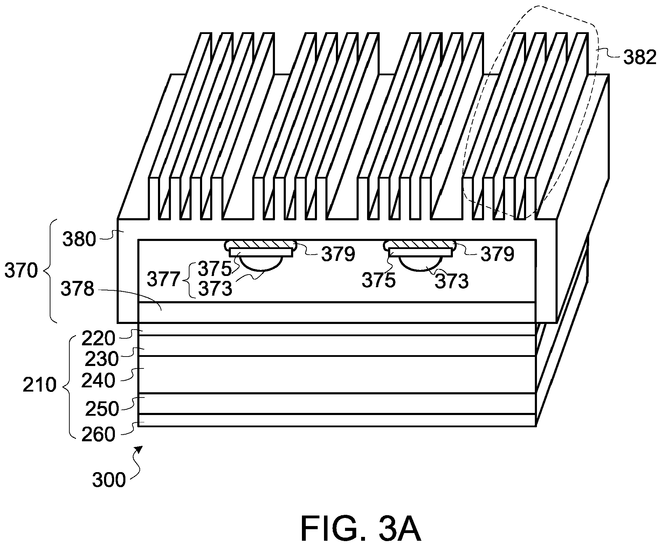

FIG. 3A is a schematic perspective view illustrating a LCD display device with enhanced heat dissipating efficacy according to a first embodiment of the present invention. The LCD display device 300 can be applied to a large-sized electronic billboard. As shown in FIG. 3A, the LCD display device 300 comprises a cell module 210 and a backlight module 370.

The cell module 210 comprises a down polarizer 320, a thin film transistor (TFT) substrate 330, a liquid crystal material layer 340, a color filtering substrate 350 and an upper polarizer 360. The structure of the cell module 210 of this embodiment is similar to that of the cell module 210 as shown in FIG. 2, and is not redundantly described herein.

The backlight module 370 comprises a heatsink-type rear bezel 380, plural light bars 377 and a diffuser 378. In an embodiment, the light bars 377 are high power LED light bars.

As shown in FIG. 3A, the backlight module 370 comprises two light bars 377. Each light bar 377 comprises plural LED elements 373 and a circuit board 375. The plural LED elements 373 are fixed on the circuit board 375. Moreover, the light bars 377 are attached on an inner surface of the heatsink-type rear bezel 380 through thermal adhesives 379.

For increasing the heat dissipating efficacy, the heatsink-type rear bezel 380 of the backlight module 370 is made of a material with high thermal conductivity. The heatsink-type rear bezel 380 is an enclosure with an opening. The light bars 377 and the diffuser 378 are covered by the heatsink-type rear bezel 380. Consequently, the light beams are not leaked out from the lateral sides or the rear side of the backlight module 370. In other words, after the light beams from the light bars 377 pass through the diffuser 378, the light beams are only allowed to exit from the front side of the diffuser 378 and enter the cell module 210.

Moreover, plural fins 382 are formed on an outer surface of the heatsink-type rear bezel 380. In an embodiment, the heatsink-type rear bezel 380 is an aluminum extrusion structure that is produced by an aluminum extrusion process. It is noted that that the invention needs not to be limited to use the aluminum extrusion process. In some embodiments, the material of the heatsink-type rear bezel can be cooper formed by using a copper process.

Due to the plural fins 382, the overall heat transfer area of the heatsink-type rear bezel 380 is increased. During operation of the LCD display device 300, the heat generated by the LED elements 373 of the light bars 377 is transferred to the heatsink-type rear bezel 380 through the circuit boards 375 and the thermal adhesives 379 and radiated to the ambient air. In comparison with the LCD display device of FIG. 2, the heat generated by the LED elements 373 of the LCD display device 300 is transferred through the thermal adhesives 379 only. Consequently, the heat dissipating efficiency of the LCD display device 300 is enhanced.

From the above descriptions, by the heatsink-type rear bezel 380, the light beams are not leaked out from the lateral sides or the rear side of the backlight module 370. Moreover, the heatsink-type rear bezel 380 has the function of dissipating heat. Consequently, the heat dissipating efficiency of the LCD display device 300 is effectively increased.

However, since the light bars 377 are attached on the inner surface of the heatsink-type rear bezel 380 through the thermal adhesives 379, the light bars 377 are possibly removed from the heatsink-type rear bezel 380 after a long use time. For increasing the reliability of the LCD display device 300, the light bars 377 are fixed on the heatsink-type rear bezel 380 through fastening elements (not shown). For example, the fastening elements are screws. After the light bars 377 are attached on the inner surface of the heatsink-type rear bezel 380 through the thermal adhesives 379, the screws are penetrated through the circuit board 375 and tightened into the heatsink-type rear bezel 380.

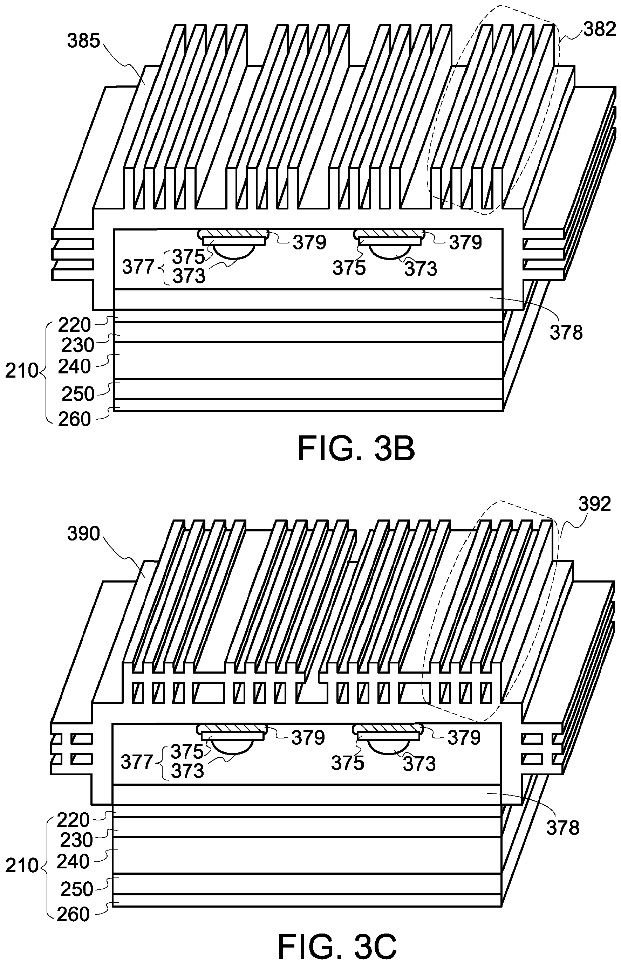

The heatsink-type rear bezel 380 of FIG. 3A may be modified according to the practical requirements. FIG. 3B and 3C are schematic perspective views illustrating two variant examples of the first embodiment of the present invention, but are not limited to the fin structure of the invention. In the embodiment of FIG. 3B, the fins 382 are formed on the lateral sides and the rear side of the heatsink-type rear bezel 385. In the embodiment of FIG. 3C, the fins 392 of the heatsink-type rear bezel 390 have other profiles.

In another embodiment, the LCD display device 300 is further equipped with an air-guiding cover and an air-guiding fan. Consequently, the heat dissipating efficiency of the LCD display device 300 is further increased.

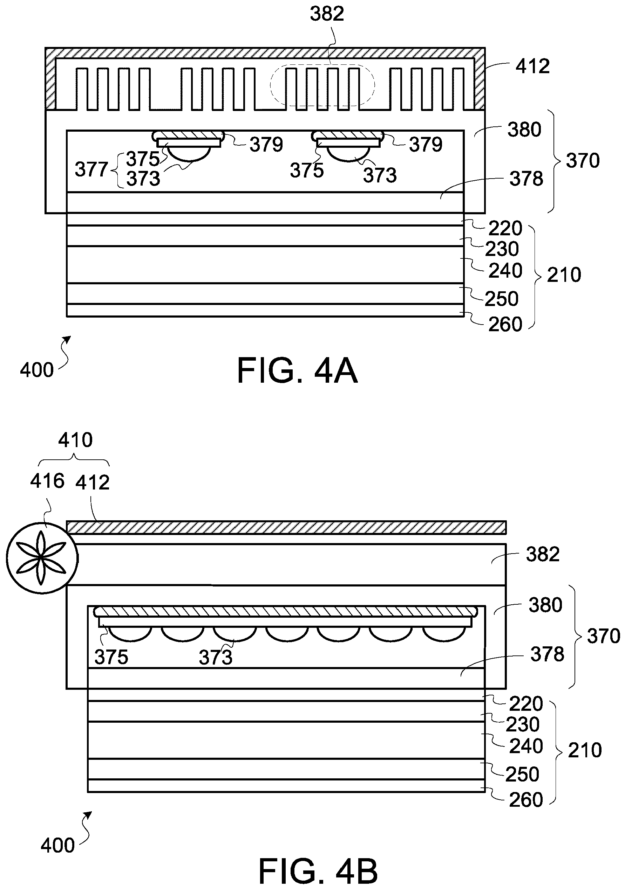

FIG. 4A is a schematic cross-sectional view illustrating a LCD display device with enhanced heat dissipating efficacy according to a second embodiment of the present invention and taken along a first direction. FIG. 4B is a schematic cross-sectional view illustrating the LCD display device according to the second embodiment of the present invention and taken along a second direction. The first direction and the second direction are perpendicular to each other.

The LCD display device 400 can be applied to a large-sized electronic billboard. As shown in FIGS. 4A and 4B, the LCD display device 400 comprises a cell module 210, a backlight module 370 and an air-guiding system 410. The structures of the cell module 210 and the backlight module 370 of this embodiment are similar to those of FIG. 3A, and are not redundantly described herein.

The air-guiding system 410 comprises an air-guiding cover 412 and an air-guiding fan 416. As shown in FIG. 4A, the fins 382 of the heatsink-type rear bezel 380 are arranged along the second direction. After the air-guiding cover 412 is combined with the heatsink-type rear bezel 380, two openings of the air-guiding cover 412 along the second direction are reserved.

As shown in FIG. 4B, the air-guiding fan 416 is installed on the air-guiding cover 412 at the location corresponding to one of the two openings of the air-guiding cover 412. An example of the air-guiding fan 416 includes but is not limited to a cross flow fan. The air-guiding fan 416 is used for creating airflow along the second direction. After the heat generated by the LED elements 373 of the light bars 377 is transferred to the heatsink-type rear bezel 380, the heat is exhausted to the surroundings of the LCD display device 400 in forced convection. Consequently, the heat dissipating efficiency of the LCD display device 400 is largely enhanced.

From the descriptions of the first embodiment and the second embodiment, the technologies of the present invention are capable of increasing the heat dissipating efficiency of the LCD display device. Since the heat dissipating efficiency is increased, the luminance of the LCD display device can be increased.

It is noted that that the invention needs not to be limited to the air-guiding system 410. In another embodiment, a close-looped liquid cooling system including tubes and a pump can be installed on the heatsink-type rear bezel to efficiently dissipate the heat.

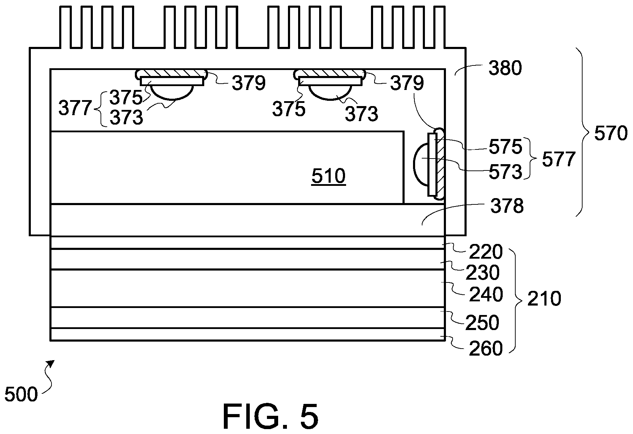

FIG. 5 is a schematic cross-sectional view illustrating a LCD display device with enhanced heat dissipating efficacy according to a third embodiment of the present invention. The LCD display device 500 can be applied to a large-sized electronic billboard. As shown in FIG. 5, the LCD display device 500 comprises a cell module 210 and a backlight module 570. The structure of the cell module 210 of this embodiment is similar to that of the cell module 210 as shown in FIG. 3A, and is not redundantly described herein.

In this embodiment, the backlight module 570 is a mixed mode backlight module. That is, the backlight module 570 has the features of the bottom-lighting backlight module and the edge-lighting backlight module.

The backlight module 570 comprises a heatsink-type rear bezel 380, plural bottom-lighting light bars 377, an edge-lighting light bar 577, a light guide plate 510, and a diffuser 378. In an embodiment, the light bars 377 and 577 are high power LED light bars. In another embodiment, the light guide plate 510 and a diffuser 378 are integrated as a single light-guiding diffuser.

In comparison with the first embodiment and the second embodiment, the backlight module 570 further comprises the edge-lighting light bar 577. The edge-lighting light bar 577 comprises plural LED elements 573 and a circuit board 575. The plural LED elements 573 are fixed on the circuit board 575. Moreover, the edge-lighting light bar 577 is attached on the inner surface of a lateral side of the heatsink-type rear bezel 380. The light beam from the edge-lighting light bar 577 is laterally introduced into the light guide plate 510. The direction of the light beam is adjusted by the light guide plate 510. After the light beam passes through the diffuser 378, the light beams exits from the front side of the diffuser 378 and enters the cell module 210.

Since the LCD display device 500 of the third embodiment comprises more light bars, the luminance of the LCD display device 500 is increased.

It is noted that numerous modifications and alterations may be made while retaining the teachings of the invention. For example, in another embodiment, the LCD display device 500 is further equipped with the air-guiding system 410 of the second embodiment in order to increase the heat dissipating efficiency. Alternatively, in another embodiment, the backlight module 570 comprises the edge-lighting light bar 577 only, but the bottom-lighting light bars 377 are omitted.

From the above descriptions, the present invention provides the LCD display device. The heatsink-type rear bezel can be used as the rear bezel of the backlight module. Moreover, the heatsink-type rear bezel further comprises plural fins. Consequently, the heat dissipating efficiency of the LCD display device is enhanced.

While the invention has been described in terms of what is presently considered to be the most practical and preferred embodiments, it is to be understood that the invention needs not be limited to the disclosed embodiment. On the contrary, it is intended to cover various modifications and similar arrangements included within the spirit and scope of the appended claims which are to be accorded with the broadest interpretation so as to encompass all such modifications and similar structures.

## Claims

1. A LCD display device comprising a backlight module (370, 570) with a rear bezel (380), a first light bar (377) and a diffuser (378), wherein after a first light beam emitted by the first light bar (377) passes through the diffuser (378), the first light beam exits the backlight module (370, 570), **characterized in that** the rear bezel (380) is a heatsink-type rear bezel (380), plural fins (382) are formed on a first surface of the heatsink-type rear bezel (380), and the first light bar (377) is fixed on a second surface of the heatsink-type rear bezel (380).

2. The LCD display device as claimed in claim 1, **characterized in that** the LCD display device further comprises a cell module (210), and an opening the heatsink-type rear bezel (380) is covered by the cell module (210), wherein after the first light beam emitted by the first light bar (377) passes through the diffuser (378), the first light beam exits from a front side of the diffuser (378) and enters the cell module (210).

3. The LCD display device as claimed in claim 1 or 2, **characterized in that** the first light bar (377) comprises a circuit board (375) and plural LED elements (373), and the plural LED elements (373) are fixed on the circuit board (375).

4. The LCD display device as claimed in claim 3, **characterized in that** the circuit board (375) of the first light bar (377) is attached on the second surface of the heatsink-type rear bezel (380) through a thermal adhesive (379).

5. The LCD display device as claimed in claim 3 or 4, **characterized in that** a fastening element is penetrated through the circuit board (375) of the first light bar (377) and tightened in the second surface of the heatsink-type rear bezel (380).

6. The LCD display device as claimed in any one of the claims 1 to 5, **characterized in that** the backlight module (370, 570) further comprises a second light bar (377, 577), and the second light bar is fixed on the heatsink-type rear bezel (380).

7. The LCD display device as claimed in claim 6, **characterized in that** the first light bar (377) and the second light bar (377) are bottom-lighting light bars.

8. The LCD display device as claimed in claim 6, **characterized in that** the backlight module (570) further comprises a light guide plate (510), the first light bar (377) is a bottom-lighting light bar, and the second light bar (577) is an edge-lighting light bar, wherein after the first light beam emitted by the first light bar (377) passes through the light guide plate (510) and the diffuser (378), the first light beam exits from the backlight module (570), wherein after a second light beam emitted by the second light bar (577) is laterally introduced into the light guide plate (510), a direction of the second light beam is changed and the second light beam passes through the diffuser (378) and exits from the backlight module (570).

9. The LCD display device as claimed in any one of the claims 1 to 8, **characterized in that** the LCD display device further comprises an air-guiding system (410) with an air-guiding cover (412) and an air-guiding fan (416), wherein the plural fins (382) of the heatsink-type rear bezel (380) are covered by the air-guiding cover (412), the air-guiding fan (416) is installed on the air-guiding cover (412) at a location corresponding to an opening of the air-guiding cover (412), and a heat from the plural fins is radiated to surroundings in forced convection by the air-guiding fan (416).

10. The LCD display device as claimed in any one of the claims 1 to 9, **characterized in that** the LCD display device further comprises a close-looped liquid cooling system having tubes and a pump installed on the heatsink-type rear bezel.
